# EUROPÄISCHE PATENTANMELDUNG

(11) **EP 4 531 238 A1**
(43) Veröffentlichungstag der Anmeldung: **02.04.2025**
(21) Anmeldenummer: 23200591.8
(22) Anmeldetag: 28.09.2023
(51) Int. Cl.: H02J 13/00

(54) **QUALITÄTSVERBESSERUNG VON NIEDERSPANNUNGS-NETZZUSTANDSSCHÄTZUNGSVERFAHREN DURCH SIMULATIONSUNTERSTÜTZTE TOPOLOGIEVERIFIKATION**

(71) Anmelder: Siemens Aktiengesellschaft, 80333 München (DE)
(72) Erfinder: HAUER, Daniel, 3400 Klosterneuburg (AT); EINFALT, Alfred, 1210 Wien (AT)
(74) Vertreter: Siemens Patent Attorneys

(57) **Zusammenfassung**

Die vorliegende Erfindung betrifft ein Verfahren zum Bestimmen von Messpunkten (150, 160, 200, 210) in einem Stromnetzwerk (100), wobei das Verfahren umfasst: Simulieren (A10) des Stromnetzwerkes (100), wobei mindestens ein Messpunkt (150, 160, 200, 210) in der Simulation repräsentiert ist; wobei das Simulieren das Modifizieren (A12) von Simulationseingaben umfasst. Das Verfahren umfasst außerdem das Auswerten (A14) des mindestens einen Messpunktes (150, 160, 200, 210) basierend auf dem Modifizieren von Simulationseingaben, sowie das Bereitstellen (A16) eines Ergebnisses des Auswertens (A14).

Die Erfindung betrifft außerdem entsprechende Einrichtungen.

## Beschreibung

Der klassische Netzbetrieb ist durch die zunehmende Durchdringung mit dezentralen, meist erneuerbaren Energieerzeugungsanlagen (DEA) vor große Herausforderungen gestellt. Hinzukommt die Entwicklung der Elektromobilität und damit eine Verstärkung der Substitution von anderen Energieübertragungsformen durch Elektrizität. Smart Grid wird, das habe die vielen unterschiedlichen Definitionen des Begriffs gemein, als Lösung für diese Problemstellung gesehen.

Um diese Änderung des Systems im Verteilnetz auch handhabbar zu machen, muss dieses daher in Zukunft ähnlich lückenlos beobachtbar sein bzw. automatisiert gesteuert werden wie ein Übertragungsnetz. Dazu werden in modernen Netzleitzentralen zunehmend spezielle Anwendungen im Distribution Management System (DMS) wie z.B. eine Distribution System State Estimation (DSSE) oder Volt/Var Control (WC) eingesetzt.

In einer Vielzahl von akademischen Arbeiten wurden bereits Verfahren zur Zustandsschätzung (State Estimation) für Niederspannungsnetzen vorgestellt. Eine große Hoffnung wurde zunächst in die Einführung von Smart Metering Systemen gesetzt. Einerseits hat sich diese Hoffnung durch restriktive Vorgaben im Zuge des Datenschutzes zerschlagen. Andererseits ist durch die zunehmende Durchdringung mit Prosumern (Teilnehmer, welche Strom produzieren und verbrauchen können, beispielsweise Haushalte mit Solarzellen; ein Prosumer kann auch als Last/Erzeuger bezeichnet sein) in den untersten Netzebenen, die Erzeugungsanlagen betreiben, und/oder bald auch vermehrt Speichersysteme einsetzen und/oder sich zu Energy Communities zusammenschließen und/oder schon durch die Einführung von Q(U) und anderer Regelungsstatiken für PV-Wechselrichter die Verwendung von entkoppelten, statischen Modellen rein aus historischen Smart Meter Daten bald obsolet.

Neben diesen verbesserten Lastdaten sind zusätzliche Messpunkte als auch das Wissen über die aktuelle Netztopologie entscheidend.

Eine der Erfindung zugrunde liegende Aufgabe besteht in der Bereitstellung einer verbesserten Technik zur Überwachung von Stromnetzen, insbesondere Niederspannungsnetzen.

Die Erfindung löst die Aufgabe mittels der Gegenstände der unabhängigen Ansprüche. Unteransprüche geben bevorzugte Ausführungsformen wieder.

Es ist ein Verfahren zum Bestimmen von Messpunkten in einem Stromnetzwerk vorgesehen. Das Verfahren umfasst das Simulieren des Stromnetzwerkes. Dabei ist mindestens ein Messpunkt in der Simulation repräsentiert. Das Simulieren umfasst das Modifizieren von Simulationseingaben. Ferner umfasst das Verfahren das Auswerten des mindestens einen Messpunktes basierend auf dem Modifizieren von Simulationseingaben, sowie das Bereitstellen eines Ergebnisses des Auswertens. Das Verfahren kann von einer Verarbeitungseinrichtung ausgeführt werden. Somit können Messpunkte für das Stromnetzwerk bestimmt werden, etwa hinsichtlich darauf, ob eine Sensorik entsprechend erweitert und/oder verringert werden sollte. Die Simulation kann ein reales Netzwerk betreffen, und/oder eine potenzielle Erweiterung und/oder einen potentiellen Ausbau des Netzwerkes, etwa durch Hinzufügen und/oder Ändern einer Netzwerkkomponente, wie etwa mindestens einer Last und/oder eines Erzeugers und/oder eines Last/Erzeugers (Prosumer) .

Der mindestens eine Messpunkt kann mindestens einen virtuellen Messpunkt und/oder mindestens einen realen Messpunkt repräsentieren. Ein virtueller Messpunkt kann ein Messpunkt sein, welcher (noch) keinen entsprechenden Messpunkt und/oder Sensor im (realen) Netzwerk hat. Ein realer Messpunkt kann ein Messpunkt sein, welcher einen tatsächlich im Netzwerk enthaltenen Messpunkt und/oder Sensor repräsentiert. Einem realen Messpunkt können tatsächlich durch Messungen im Betrieb genommene Messwerte zugeordnet sein; eine Simulation kann auf solchen Messwerten basieren. Einem virtuellen Messwert und/oder realen Messpunkt können virtuelle Messwerte zugeordnet sein, etwa durch die Simulation erzeugt; solche Messwerte können Ergebnis der Auswertung sein, und/oder bei der Auswertung bereitgestellt sein und/oder werden. Somit können unterschiedliche Arten von Messpunkten ausgewertet werden, etwa hinsichtlich ihrer Eignung, um das Netzwerk zu überwachen.

Das Simulieren kann das Simulieren unterschiedlicher Typologien und/oder Schalterstellungen und/oder Zustände des Netzwerkes umfassen. Damit kann berücksichtigt werden, dass ein genauer Zustand und/oder genaue Topologie und/oder genaue Schalterstellung des Netzwerkes unbekannt sein kann. Mögliche Zustände und/oder Schalterstellung und/oder Topologien können dabei bekannt und/oder angenommen sein. Allgemein kann das Netzwerk einen oder mehrere Schalter (mit unterschiedlichen Schalterstellungen), und/oder mehreren möglichen Schaltungen, und/oder Zustände wie Schaltzustände und/oder Betriebszustände, und/oder Topologien umfassen und/oder aufweisen). Der genaue Zustand und/oder genaue Schaltung und/oder Schalterstellungen und/oder Topologie kann unbekannt sein, etwa weil nicht alle Zustände und/oder Schaltungen und/oder Schalterstellungen und/oder Topologien durch Sensorik unmittelbar erfassbar sind. Entsprechend können mögliche Ungenauigkeiten berücksichtigt und/oder aufgefangen werden.

Das Auswerten des mindestens einen Messpunktes und/oder das Ausgeben des Ergebnisses kann die Verwendbarkeit des Messpunktes für die Netzwerküberwachung betreffen. Dabei kann ein Messpunkt als verwendbar angesehen werden, wenn virtuelle Messwerte hinreichend als Reaktion auf die modifizierten Simulationseingaben schwanken. Dabei kann die Verwendbarkeit basierend auf absoluten oder relativen Schwankungen bestimmt werden, und/oder basierend auf Schwellenwerten. Ein Messwert kann dabei ein oder mehrere erfasste Größen betreffen und/oder davon abgeleitete Größen. Absolute Schwankungen können absolut bestimmte Größen betreffen, etwa Mindestwerte für Strom- und/oder Spannungsschwankungen oder Änderungen. Relative Schwankungen können relativ bezüglich desselben Messpunktes sein, und/oder relativ zu einem oder mehreren anderen Messpunkten. Somit können geeignete Messpunkt bezüglich des Netzwerkes bestimmt werden.

Allgemein können die Simulationseingaben Lastprofile und/oder Lastmodelle und/oder Erzeugungsprofile und/oder Erzeugungsmodelle umfassen. Dabei können einzelne Parameter solcher Modelle und/oder Profile modifiziert werden, etwa bereitgestellte Leistung und/oder Stromstärke und/oder Spannung und/oder Energie. Ein Modell und/oder Profil kann auf tatsächlichen Werten basieren (etwa Messwerten und/oder berichteten Werten), und/oder auf Kapazitätsdaten. Ein Modell und/oder Profil kann einen Zeitverlauf repräsentieren. In einigen Fällen, etwa bei Verwendung regenerativer Energiequellen (etwa Windkraft und/oder Solarenergie) kann ein Modell und/oder Profil auf geographischen Daten und/oder meteorologischen Daten basieren. Ein Profil und/oder Modell kann eine bestimmte Komponente und/oder einen bestimmten Knoten des Netzwerkes betreffen, etwa eine Last und/oder einen Erzeuger und/oder einen Last/Erzeuger oder Prosumer.

Es kann vorgesehen sein, dass das Netzwerk ein Niederspannungsnetzwerk ist, welches ein oder mehrere Lasten und/oder ein oder mehrere Erzeuger und/oder ein oder mehrere Last/Erzeuger umfassen kann. Das Verfahren ist besonders für solche Netzwerke geeignet, welche oft komplex sind und/oder über wenig Sensorik verfügen. In einigen Fällen kann das Netzwerk ein Mittelspannungsnetzwerk sein, und/oder umfassen, und/oder mehrere Niederspannungsnetzwerke, welche an dem gleichen Mittelspannungsnetzwerk angeschlossen sein können. Somit kann etwa ein Sensorausfall bei einem Mittelspannungsnetzwerk aufgefangen werden, und/oder das Verhalten der Niederspannungsnetzwerke beim Simulieren und/oder Betreiben des Mittelspannungsnetzwerkes mit guter Genauigkeit berücksichtigt werden.

Das Verfahren kann das Ansteuern des Netzwerkes basierend auf dem Auswerten und/oder dem Ausgeben umfassen. Etwa kann eine Schaltung und/oder ein Schalter und/oder eine Netzwerkkomponente angesteuert werden, etwa in einen gewünschten Zustand und/oder eine gewünschte Einstellung gebracht werden. Das Netzwerk kann über eine geeignete Kommunikationseinrichtung verfügen, welche etwa das Ansteuern ermöglicht. Etwa kann ein Schalter und/oder eine Komponentensteuerung zur Kommunikation mit einer das Verfahren ausführenden Verarbeitungseinrichtung ausgebildet sein. Somit kann ein hohes Maß an Automatisierung erreicht werden.

Der mindestens eine Messpunkt kann für eine als korrekt erkannte Topologie ausgewertet werden, etwa basierend auf einem Verfahren zur Verifikation und/oder Erkennung einer Topologie. Dieses Verfahren kann auf Simulationen basieren, etwa wie hierin beschrieben.

Das Simulieren kann allgemein (etwa für ein Erkennungsverfahren und/oder ein Bestimmungsverfahren) basierend auf einer oder mehreren Abbruchbedingungen durchgeführt werden. Eine Abbruchbedingung kann etwa eine hinreichende Annäherung der Simulation an vorliegende tatsächliche Messwerte repräsentieren. Somit kann eine gewünschte Genauigkeit erreicht werden.

Das Simulieren kann allgemein (etwa für ein Erkennungsverfahren und/oder ein Bestimmungsverfahren) basierend auf Modifikationseinschränkungen durchgeführt werden. Solche Einschränkungen können unerwünschte und/oder unmögliche Werte von Parametern von Eingaben betreffen, etwa basierend auf tatsächlichen Gegebenheiten, wie Leistungskapazitäten von Komponenten und/oder Leitungen und/oder Knoten des Netzwerkes.

Alternativ oder zusätzlich zu einem Verfahren zum Bestimmen von Messpunkten kann ein hierin beschriebenes Erkennungsverfahren vorgesehen sein. Damit kann eine tatsächlich eingenommene Topologie und/oder Schaltung des Netzwerkes bestimmbar sein.

Ferner ist eine Verarbeitungseinrichtung vorgesehen, welche dazu ausgebildet ist, ein hierin beschriebenes Verfahren durchzuführen. Dazu kann die Verarbeitungseinrichtung eine entsprechende Verarbeitungsschaltung aufweisen.

Es ist außerdem ein Computerprogrammprodukt vorgesehen, welches computer-ausführbare Instruktionen enthält, welche eine Verarbeitungseinrichtung dazu bringen, ein hierin beschriebenes Verfahren auszuführen, wenn das Computerprogrammprodukt auf der Verarbeitungseinrichtung ausgeführt wird. Das Computerprogrammprodukt kann ein Modul für jede Aktion und/oder Verfahrensschritt umfassen.

Ein computerlesbares Speichermedium ist beschrieben, welches ein hierin beschriebenes Computerprogrammprodukt speichert.

Das Simulieren kann allgemein das wiederholte Simulieren mit unterschiedlichen (etwa modifizierten) Simulationseingaben umfassen. Das Auswerten kann einzelne Simulationen (oder Simulationsläufe) betreffen. Jeder Simulation und/oder jedes Simulieren kann einen Zeitverlauf betreffen; unterschiedliche Simulationen können den gleichen Zeitverlauf betreffen. Das Modifizieren kann das Skalieren und/oder Verändern eines oder mehrerer Parameter von Simulationseingaben umfassen; für unterschiedliche Simulationen (Simulationsläufe) können unterschiedliche Parameter und/oder unterschiedliche Simulationseingaben modifiziert werden.

Jedem Messpunkt kann ein Sensor zugeordnet sein, welcher einen oder mehrere Größen oder Parameter erfasst; ein solcher Sensor kann virtuell sein, etwa nur in der Simulation vorhanden, für einen virtuellen Messpunkt, oder real, etwa mit einer Entsprechung im realen Netzwerk. Erfasst Größen können insbesondere Stromstärke und/oder Stromstärkenänderung, und/oder Spannung und/oder Spannungsänderung, und/oder Widerstand und/oder Widerstandsänderung, und/oder Impedanz und/oder Impedanzänderung, und/oder Frequenz und/oder Frequenzänderung betreffen und/oder repräsentieren.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Figur 1: eine beispielhafte Netzwerktopologie;
- Figur 2: eine weitere beispielhafte Netzwerktopologie;
- Figur 3: eine weitere beispielhafte Netzwerktopologie; und
- Figur 4: ein Flussdiagramm eines beispielhaften erfindungsgemäßen Verfahrens
darstellt.

Es wird ein Verfahren vorgeschlagen, welches konkrete Messpunkte vorschlägt, um eine effiziente Ausbringung von Sensoren ermöglichen und/oder die Qualität der Niederspannungsnetz-Zustandsschätzung zu verbessern. Das Verfahren kann auf einem Verfahren basieren, welches verifiziert, ob eine angenommene Topologie eines Netzwerkes korrekt ist, also die angenommene Verschaltung des Netzes. Das Verfahren kann auch als Messpunktverfahren und/oder Verfahren zum Bestimmen von Messpunkten bezeichnet werden.

Beim Betrieb von Niederspannungsnetzen mit immer komplexeren Prosumern wurden in der Regel frühere Sicherheitsreserven des Netzes genutzt. Verteilernetze wurden vor der Liberalisierung der Verteilernetze in Europa gemäß der Prämisse einer möglichst zuverlässigen und sicheren Versorgung geplant. Die Betriebsmittel wurden für Grenzwerte ausgelegt, die es im Falle eines späteren Anschlusses weiterer Kundenanlagen (insbesondere im Niederspannungsnetz) ermöglichen, ohne zusätzliche Grabungs- und Baumaßnahmen auszukommen. Ein wesentlicher Planungsgrundsatz war bisher die relativ geringe Wahrscheinlichkeit des Auftretens von großen Leistungsspitzen zu gleichen Zeitpunkten. Durch diese geringen Gleichzeitigkeitsfaktoren beim herkömmlichen Verbrauch konnten viele Kunden angeschlossen werden. Insbesondere durch die sukzessive Steigerung der Elektromobilität und der damit verbundenen Ladestellen, aber auch durch Wärmepumpen kommen mittlere bis große Verbraucher in die Niederspannungsnetzen, die sehr hohe Gleichzeitigkeiten in ihrem Lastverhalten aufweisen können.

Die "Standardlösung" ist nach wie vor der kostenintensive Ausbau des Netzes. Dies geschieht einerseits durch Verlegung zusätzlicher Leitungen oder der Installation neuer Transformatorstationen (inklusive eines Rekonfigurierens der Netztopologie) .

Die zweite Möglichkeit besteht darin, über Messwerte den Zustand hinsichtlich Betriebsgrenzen und der aktuellen Auslastung des Netzes zu schätzen. In modernen Netzleitzentralen werden zunehmend spezielle Anwendungen im Distribution Management System (DMS), wie z.B. eine Distribution System State Estimation (DSSE) und fallweise auch schon eine Volt/Var Control (WC) eingesetzt. Derartige Anwendungen arbeiten mit Last- bzw. zunehmend auch Erzeugungsmodellen für einzelne Netzknoten, an denen größere Lasten (Industriebetrieb, ...), größere Erzeuger ((Klein)wasserkraftwerk,...) und eben auch eine große Zahl von Niederspannungs (orts-)netzen angeschlossen sind.

VVC verwendet Aktoren wie z.B. Regelumformer im Umspannwerk, FACTS und mittelgroßen Kraftwerken, sowie noch in sehr geringem Ausmaß regelbare Ortsnetztransformatoren.

Ortsnetze (Niederspannungsnetze werden dabei als passive Lasten modelliert (Standardlastprofile, ggf. einfach worst case Erzeugungsprofile) .

Es ist zu erwarten, dass die Modelle selbst zukünftig etwas genauer werden, da anstelle von standardisierten Lastprofilen kumulierte Profile basierend auf Smart Meter Daten verfügbar sein werden. Messwerte werden bereits vereinzelt eingebunden. Die Last- bzw. Erzeugungsmodelle für diese DSSE Anwendungen werden statisch parametriert und meist über einige ausgewählte Messpunkte skaliert. Dies wird auch als "load-trimming" bezeichnet.

Genau wie DSSE Anwendungen für Mittelspannungsnetze arbeiten auch einige der Verfahren für Niederspannungsnetze. Die Annahme besteht darin, dass in Zukunft über Smart Metering sehr genaue 15min Profile für alle Kunden (wie Eingangs beschrieben, stellt der Datenschutz in vielen Ländern ein Hindernis für diese Annahme dar) zur Verfügung stehen. Außerdem soll es intelligente Transformatorstationen geben, in denen zumindest der Lastfluss über den Transformator und bestenfalls auch aufgelöst auf einzelne Abgänge zur Verfügung stehen. Über diverse Korrelations- bzw. "Load-Trimming" Verfahren werden nun die Lasten so angepasst, dass sie zu den aktuellen Messwerten des Transformators bzw. der Abgänge passen. Das setzt ein Vertrauen in die Richtigkeit der Topologie voraus und bei komplexeren Netztopologien ergeben sich sehr viele Möglichkeiten für die Anpassung der Lasten. Eine eindeutige Lösung ist nicht möglich.

Es wird ein Verfahren zur Verifikation oder Erkennung von Netzwerktopologien vorgeschlagen. Das Verfahren kann durch eine Verarbeitungsvorrichtung ausgeführt werden, etwa ein Computersystem und/oder automatisiert. Dieses Verfahren kann auch als Erkennungsverfahren bezeichnet sein. Ein Bestimmungsverfahren kann ein Erkennungsverfahren umfassen, und/oder darauf basieren.

Ein beispielhaftes (Erkennungs-) Verfahren kann Load Trimmung mit Simulationsunterstützung umfassen.

Das Verfahren zur Verifikation oder Erkennung kann allgemein auf einem Netzmodell (welches eine Netzwerktopologie repräsentieren kann) basieren. Ein als bekannt angenommenes Netzmodell kann beispielsweise bereitgestellt und/oder geladen werden. Ein Netzmodell und/oder eine Topologie kann einen möglichen Zustand eines Netzwerkes repräsentieren, etwa hinsichtlich möglicher Schalterzustände und/oder Vorhandensein von Lasten/Erzeugern.

Lastprofile/Lastmodelle und Erzeugungsprofile/Erzeugungsmodelle für Elektrizität können für alle Netzverknüpfungspunkte vorbereitet und/oder bereitgestellt werden. Profile können auf Messwerten basieren. Dabei können unterschiedliche Arten von Modellen kombiniert werden, um ein möglichst gutes Einstiegsszenario zu erhalten. Solche Modelle können etwa umfassen: Modelle basierend auf realen Daten (z.B. Smart Meter Daten) von ähnlichen Lasttypen, die z.B. auch mit statistischen oder geographischen Daten erweitert/ergänzt werden können; und/oder Modelle basierend auf heterogenen Datenquellen (z.B. PV (Photovoltaik) Erzeugungsmodell basierend auf meteorologischen und geographischen Daten) ; und/oder Modelle basierend auf standardisierten Lastprofilen.

Lastflusssimulationen können durchgeführt werden. Dabei können die Last- und Erzeugungsmodelle skaliert werden, insbesondere gleichmäßig skaliert werden. Die Topologie kann jedoch unverändert sein. Diese Skalierung kann erfolgen, bis bestimmte Abbruchkriterien erreicht sind. Abbruchkriterien können beispielsweise eine maximale Abweichung der Simulationswerte von den vorhandenen Messdaten am Transformator / an ausgewählten Abgängen (Messstellen) definiert sein können.

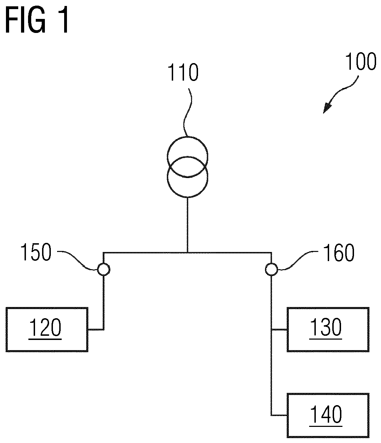

Figur 1 skizziert eine beispielshafte Netzwerktopologie 100 (welche durch ein Netzmodell repräsentiert sein kann). Das repräsentierte Netzwerk (etwa ein Niederspannungsnetzwerk) kann über einen Transformator 110 an ein Mittelspannungsnetzwerk angeschlossen sein. Das Netzwerk 100 umfasst die drei Lasten 120, 130, 140 (welche jeweils Erzeuger und/oder Verbraucher sein können). Für jede Last kann ein Profil und/oder Modell bereitgestellt oder hinterlegt sein. Eine Simulation kann die Lasten entsprechend simulieren. Es sind zwei (im realen Netz vorhandene) Messpunkte 150, 160 vorgesehen, von denen reale Daten bekannt sein können. Die Simulation kann auf den realen Daten und/oder der Position der Messpunkte im Netzwerk basieren. Die Profile der drei Lasten können in der Simulation nun so lange modifiziert werden, bis die Simulationsdaten der zwei Messpunkte ausreichend genau mit den realen Daten übereinstimmen.

Im Allgemeinen können eine Vielzahl an Profilen mit jeweils ein oder mehreren Parametern vorliegen, die unabhängig voneinander modifiziert werden können. Um die daraus resultierende Menge an potenziellen Skalierungen einzuschränken, können verschiedene Strategien verfolgt werden. Das Verfahren kann darauf basieren, dass bestimmte Lasten bzw. Parameter als fix angenommen werden, beispielsweise weil reale exakte Messdaten vorhanden sind, und/oder weil das Vertrauen in die Korrektheit der Profile vorhanden ist (Z.B. gemessene Erzeugungsanlagen); und/oder darauf, dass minimale und/oder maximale Thresholds (Schwellenwerte) für verschiedene Parameter deren Parameterraum begrenzen. Z.B. kann die Maximalauslastung eines Strangs die Skalierungsmöglichkeiten der angeschlossenen Lasten limitieren. Auch die Lastprofile selbst können Begrenzungen hinsichtlich der Skalierung besitzen (z.B. maximale Nennleistung von Erzeugern, Beibehaltung der Profilform, ...).

Simulationsläufe werden für alle möglichen Netztopologien, also Verschaltungen, wiederholt. Theoretisch ergeben sich in komplexen Netztopologien dadurch eine Vielzahl von Möglichkeiten, die das kombinatorische Problem zu groß für eine Lösung in hinreichender Zeit machen.

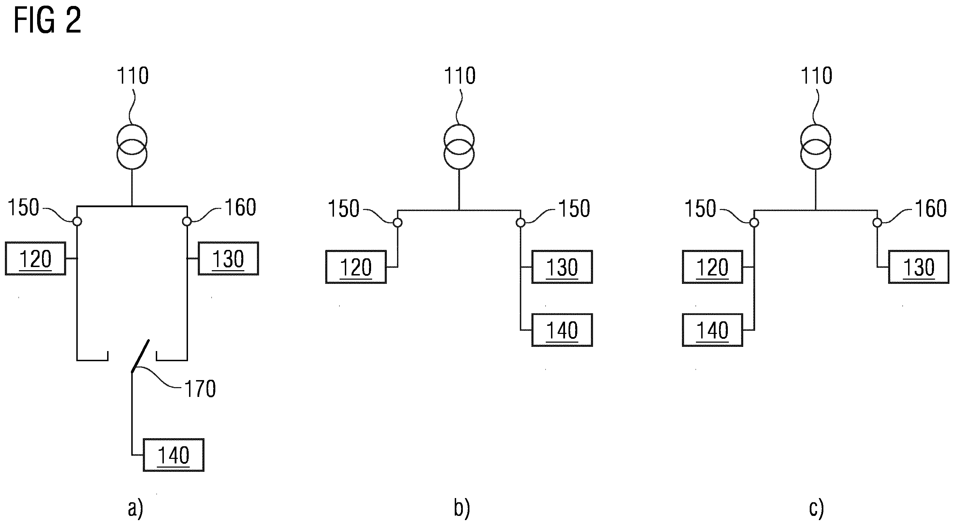

Figur 2 verdeutlicht dies anhand eines einfachen Beispiels mit nur einer möglichen Verschaltung und zwei daraus resultierenden möglichen Topologien. Basierend auf der in Figur 1 gezeigten Topologie, kann ein zusätzlicher Schalter 170 vorgesehen sein (siehe Figur 2a). Je nach Schalterstellung ergibt sich die Topologie aus Figur 1 (siehe Figur 2b), oder eine abgewandelte Topologie (siehe Figur 2c).

Durch den gezielten Einsatz von Eingabebeschränkungen wie etwa domänenspezifischen Metriken wie z.B. Schaltungen unter Last nur an Stellen mit Trennerleisten, Maximalauslastung von Kabeln usw., unternehmensspezifischen Vorgaben für Anzahl der Kunden an einzelnen Leitungen, usw. lassen sich die Zahl der Simulationsläufe (Modifikationen) auf einen eingeschränkten Satz von Alternativtopologien einschränken.

Das Verfahren zur Verifikation kann die Auswertung der Simulation/en, etwa der Load Trimming Analysen, umfassen.

Ist der Simulationslauf mit der zunächst angenommenen Topologie derjenige, bei dem die geringsten Anpassungen an den Lasten und Erzeugern im Zuge des Load Trimmings vorgenommen werden mussten, kann von der Korrektheit der Topologie und/oder Verschaltungsannahme ausgegangen werden. Ist etwa die Verschaltung in 2b) jene, die vorab angenommen wurde, und ist für 2b) auch eine wesentlich geringere Skalierung der Lastprofile 1-3 nötig als im Vergleich zu 2c), dann kann davon ausgegangen werden, dass die angenommene Verschaltung korrekt ist und die geringe Skalierung der Profile in Zukunft eine bessere State-Estimation liefern wird.

Liefern hingegen Simulationsläufe mit einer anderen Verschaltung ebenfalls gute Ergebnisse, und/oder ist hier die notwendige Skalierung der Lastprofile deutlich geringer als bei jenen Simulationsläufen mit der ursprünglich angenommenen Verschaltung, so kann dies ein Indiz für eine falsch angenommene Verschaltung sein. Das Verfahren kann in diesem Fall eine Meldung erzeugen, damit in dem betroffenen Netzsegment (bzw. mehreren Segmenten), wo eine abweichende Verschaltung bessere/ähnlich gute Ergebnisse geliefert hat, eine Kontrolle vor Ort veranlasst werden kann. So kann die z.B. im GIS hinterlegte Topologie im Vergleich zur tatsächlichen Netzverschaltung geprüft werden. Erscheint der Einsatz eines Service Teams zu aufwendig, vor allem wenn der Verdacht eines fehlerhaften Topologieabbildes (Netzwerkmodell) aufgrund der Ergebnisse nicht ausreichend begründet werden kann, so kann die Kontrolle auch indirekt erfolgen, etwa basierend auf nachfolgend beschriebenen Aktionen.

Mit Bezug auf Figur 2 kann sich beispielhaft ergeben: Die Simulation ergibt für die Schaltung 2b), dass die angenommenen Profile 1-3 sehr stark angepasst werden müssen, damit die simulieren Messdaten an den beiden Strängen mit den realen übereinstimmen. Bei der Simulation von Variante 2c) fallen die notwendigen Skalierungen deutlich geringer aus. Obwohl Variante 2b) als die korrekte aktuelle Verschaltung angenommen wurde, erzeugt die Auswertung eine Meldung, dass Variante 2c) bessere Ergebnisse (=geringere notwendige Skalierungen) liefert. Eine Überprüfung vor Ort würde nun feststellen, dass tatsächlich die Verschaltung gemäß 2c) vorliegt und nicht wie angenommen gemäß 2b) .

Allgemein kann ein Verfahren vorgesehen sein, welches einen Vorschlag für (reale) Messpunkte betriff, etwa einen oder mehrere zusätzliche Messpunkte, oder die Wegnahme eines vorhandenen Messpunkts.

Da es im Allgemeinen eine große Vielzahl an möglichen Topologie-Verschaltungen gibt, kann es trotz der genannten Methoden zur Einschränkung hilfreich sein, gezielt neue Messpunkte in das Netzsegment (Netzwerk) einzubauen. So kann bei zukünftigen Wiederholungen dieses Verfahrens (um z.B. regelmäßig die State-Estimation an neue Einflüsse oder Änderungen in den tatsächlichen Profilen anzupassen) ein besseres bzw. schnelleres (weniger rechenintensives) Ergebnis geliefert werden. Das Verfahren kann das Simulieren eines Netzwerkes umfassen, etwa basierend auf dem Verfahren zur Verifikation, und/oder basieren auf ermittelten Skalierungen der Profile.

Das Verfahren kann das Definieren virtueller Messpunkte im Netzwerk umfassen. Die Simulationsergebnisse von diesen Punkten (z.B. Spannungswerte am Ende eines langen Netzstranges) können für weitere Simulationen als geschätzte Messdaten interpretiert werden.

Es kann eine Simulation unter Verwendung der realen als auch der neu definierten, geschätzten Messwerte vorgesehen sein, etwa wie oben beschrieben, und/oder unter Anwendung des Load Trimmings bei allen Netztopologien (die Simulation kann auf den gleichen Einschränkungen basieren).

Es kann vorkommen, dass es an einigen Topologievarianten zu einem großen Skalierungsbedarf der Last-/Erzeugungsmodelle kommt, denn die virtuellen Messpunkte können bei falscher Topologie unzutreffend sein.

Die Messpunkte (auch Messstellen genannt), bei denen die verschiedenen Topologievarianten große Unterschiede bei den nötigen Skalierungen bewirken, können daher gut geeignet sein, um in zukünftigen Wiederholungen des Verfahrens in der Realität die Ermittlung der tatsächlichen Verschaltung zu vereinfachen.

Ein weiteres Ergebnis dieser Analyse könnte auch sein, dass erkannt wird, dass existierende Messpunkte keine gute Aussagekraft für die Topologieerkennung haben. Diese Punkte könnten dann etwa auch eingespart werden.

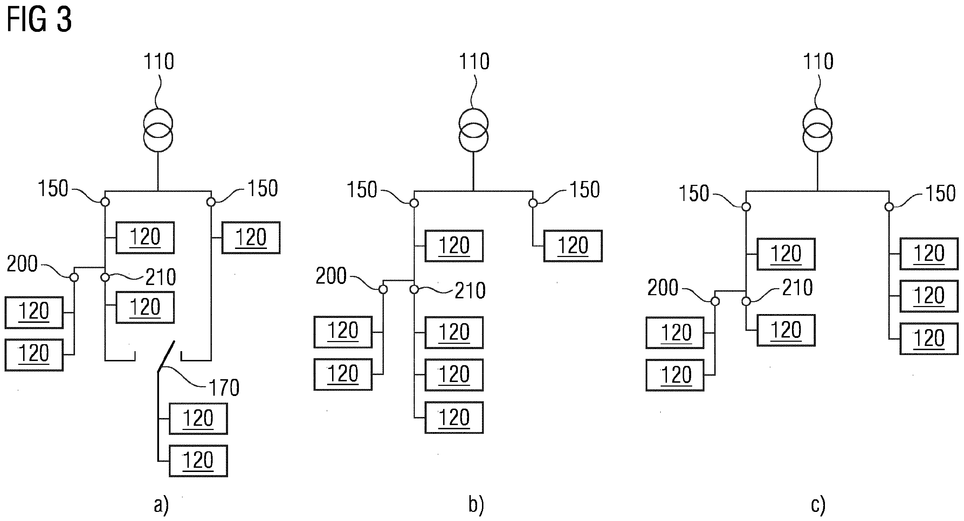

Das Verfahren wird mit Bezug auf Figur 3 an einem Beispiel erläutert. In Figur 3 sind der Übersichtlichkeit halber Anschlüsse an das Mittelspannungsnetz/Transformatoren mit dem Bezugszeichen 110 versehen, Produzenten/Verbraucher im Netzwerk mit 120, reale Messpunkte mit 150, Schalter mit 170, und virtuelle Messpunkte mit 200, 210.

In Figur 3a) ist ein Netzsegment (Netzwerk, etwa Niederspannungsnetzwerk) mit zwei vorhandenen Messpunkten 150 repräsentiert. Zusätzlich werden vereinfacht nur zwei virtuelle Messpunkte 200, 210 angenommen - diese können potenzielle zukünftige Messpunkte repräsentieren. Bei den anschließenden Simulationen der beiden möglichen Verschaltungen (Schalterstellungen des Schalters 170) zeigt sich, dass die Messergebnisse beim Messpunkt 200 sehr ähnlich sind, beim Messpunkt 210 gibt es hingegen klare Unterschiede (weil hier offensichtlich unterschiedliche Lasten nachfolgen). Somit könnte Messpunkt 210 zukünftig als hilfreicher realer Messpunkt verwendet werden. Eine realer Messpunkt 200 könnte hingegen weniger hilfreich sein.

Als Ergebnis kann dem Netzbetreiber eine Liste an günstigen neuen Messpunkten bzw. eine Liste von existierenden, aber nicht benötigten Messpunkten vorgeschlagen werden. Das Verfahren kann das entsprechende Anzeigen und/oder Ausgeben umfassen. Somit kann ein effizienter Ausbau der Sensorik und eine besser zukünftige State Estimation unterstützt werden. Weiterhin kann das Verfahren das Steuern und/oder den Ausbau des Netzwerkes umfassen, etwa basierend auf Verifikation und/oder Bestimmung von Messpunkten.

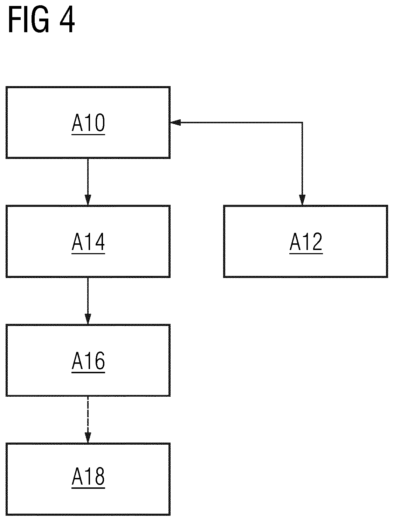

Figur 4 zeigt ein Flussdiagramm eines beispielhaften Verfahrens zum Bestimmen von Messpunkten in einem Stromnetzwerk; bereit beschrieben Details können die jeweiligen Aktionen betreffen.

Das Verfahren umfasst in einer Aktion A10 das Simulieren des Stromnetzwerkes, wobei mindestens ein Messpunkt in der Simulation repräsentiert ist. Als Teil des Simulierens und/oder in einem oder mehreren sukzessiv durchgeführten Simulationsschritten umfasst das Simulieren die Aktion A12 des Modifizierens von Simulationseingaben; es kann somit mehrmals mit unterschiedlichen Eingaben simuliert werden. Darauf basierend umfasst eine Aktion A14 das Auswerten des mindestens einen Messpunktes basierend auf dem Modifizieren von Simulationseingaben. Ferner ist in einer Aktion A16 das Bereitstellen eines Ergebnisses des Auswertens (A14) vorgesehen. In einer Aktion A18 kann das Ansteuern des Netzwerkes basierend auf dem Auswerten und/oder der Ausgabe vorgesehen sein.

Dieses Verfahren ist allgemein besonders für Szenarien geeignet, in welchen durch eine Vielzahl an möglichen Topologien und einem sehr komplexen Verhalten der Teilnehmer (mit verbrauchendem, erzeugendem und/oder speicherndem Verhalten) die notwendigen neuen Messpunkte nicht mehr durch einfache (menschliche) Analyse der Topologie ermittelt werden können.

Der Ausbau zusätzlicher Sensorik kann zielgerichtet und kosteneffizient gestaltet werden. Der Ausbau verursacht einerseits die Anschaffungs- und Installationskosten, aber auch später laufende Aufwände im operativen Betrieb. Deswegen ist kann es wichtig sein, Sensorik in geeigneten Fällen und in Netzen auszubauen, die sich nicht durch reine Abgangsmessungen ausreichend schätzen lassen.

Zusätzlich zu dem Ausbau neuer Sensorik kann analysiert das vorgeschlagene Verfahren zu Bestimmen von Messpunkten auch bereits existierende Messpunkte analysieren, und kann etwa deren Abbau vorschlagen, wenn die Messwerte keine oder wenig relevante Informationen für die State Estimation bzw. das vorgeschlagene Erkennungsverfahren enthalten. Dies kann die laufenden Wartungskosten und den Wartungsaufwand senken. Das Verfahren ermöglicht eine effiziente Abschätzung des Netzzustandes insbesondere in der untersten Verteilnetzebene und sorgt für eine zielgerichtete Ausbaustrategie für zusätzliche Messsensorik.

Das Verfahren (Messpunktverfahren und/oder Erkennungsverfahren) kann durch eine Verarbeitungsvorrichtung durchgeführt werden.

Die Verarbeitungseinrichtung kann allgemein Verarbeitungslogik, und/oder Verarbeitungsschaltungen, und/oder Speicher aufweisen, welche betreibbar sind, um das Verfahren auszuführen. Es kann vorgesehen sein, dass die Verarbeitungseinrichtung ein einzelnes System oder ein verteiltes System repräsentiert, etwa einen oder mehrere Computer und/oder ein Computersystem, und/oder als Cloud-System implementiert ist. Eine Verarbeitungslogik kann eine integrierte Schaltung und/oder eine oder mehrere Prozessoren und/oder Controller und/oder ASICs (Application Specific Integrated Circuitry, Anwendungsspezifische integrierte Schaltung) oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM (Random Access Memory) und/oder optischen Speicher und/oder magnetischen Speicher und/oder Flash und/oder NAND (Not AND) Speicher, usw. Es kann allgemein ein Speichermedium vorgesehen sein, welches Instruktionen speichert, die dazu geeignet sind, eine Verarbeitungseinrichtung dazu zu bringen, das hierin beschrieben Verfahren auszuführen. Das Speichermedium kann insbesondere ein nicht-flüchtiges und/oder nicht-transitorisches Medium sein. Es ist ein Computerprogramm beschrieben, welches derartige Instruktionen aufweist. Das Computerprogramm kann Module aufweisen, um die Aktionen und/oder Schritte des Verfahrens auszuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Bestimmen von Messpunkten (150, 160, 200, 210) in einem Stromnetzwerk (100), wobei das Verfahren umfasst:
Simulieren (A10) des Stromnetzwerkes (100), wobei mindestens ein Messpunkt (150, 160, 200, 210) in der Simulation repräsentiert ist;
wobei das Simulieren das Modifizieren (A12) von Simulationseingaben umfasst;
Auswerten (A14) des mindestens einen Messpunktes (150, 160, 200, 210) basierend auf dem Modifizieren von Simulationseingaben;
Bereitstellen (A16) eines Ergebnisses des Auswertens (A14) .

2. Verfahren nach Anspruch 1, wobei der mindestens eine Messpunkt (150, 160, 200, 210) mindestens einen virtuellen Messpunkt (200, 210) und/oder mindestens einen realen Messpunkt (150, 160) repräsentiert.

3. Verfahren nach einem der vorhergehenden Ansprüche, wobei das Simulieren (A10) das Simulieren unterschiedlicher Topologien und/oder Schalterstellungen und/oder Zustände des Netzwerkes (100) umfasst.

4. Verfahren nach einem der vorhergehenden Ansprüche, wobei das Auswerten (A14) des mindestens einen Messpunktes (150, 160, 200, 210) und/oder das Ausgeben des Ergebnisses (A16) die Verwendbarkeit des Messpunktes für die Netzwerküberwachung betrifft.

5. Verfahren nach einem der vorhergehenden Ansprüche, wobei die Simulationseingaben Lastprofile und/oder Lastmodelle und/oder Erzeugungsprofile und/oder Erzeugungsmodelle umfassen.

6. Verfahren nach einem der vorhergehenden Ansprüche, wobei das Netzwerk (100) ein Niederspannungsnetzwerk ist, welches ein oder mehrere Lasten (120, 130, 140) und/oder ein oder mehrere Erzeuger (120, 130, 140) und/oder ein oder mehrere Last/Erzeuger (120, 130, 140) umfassen kann.

7. Verfahren nach einem der vorhergehenden Ansprüche, wobei das Verfahren das Ansteuern (A18) des Netzwerkes (100) basierend auf dem Auswerten (A14) umfasst.

8. Verfahren nach einem der vorhergehenden Ansprüche, wobei der mindestens eine Messpunkt (150, 160, 200, 210) für eine als korrekt erkannte Topologie ausgewertet wird, etwa basierend auf einem Verfahren zur Verifikation und/oder Erkennung einer Topologie.

9. Verfahren nach einem der vorhergehenden Ansprüche, wobei das Simulieren (A14) basierend auf einer oder mehreren Abbruchbedingungen durchgeführt wird.

10. Verfahren nach einem der vorhergehenden Ansprüche, wobei das Simulieren basierend auf Modifikationseinschränkungen durchgeführt wird.

11. Verarbeitungseinrichtung, welche dazu ausgebildet ist, ein Verfahren nach einem der Ansprüche 1 bis 10 durchzuführen.

12. Computerprogrammprodukt, welches computer-ausführbare Instruktionen enthält, welche eine Verarbeitungseinrichtung dazu bringen, ein Verfahren nach einem der Ansprüche 1 bis 10 auszuführen, wenn das Computerprogrammprodukt auf der Verarbeitungseinrichtung ausgeführt wird.

13. Computerlesbares Speichermedium, welches ein Computerprogrammprodukt nach Anspruch 12 speichert.
